# EUROPÄISCHE PATENTANMELDUNG

(11) **EP 0 566 855 A1**
(43) Veröffentlichungstag der Anmeldung: **27.10.1993**
(21) Anmeldenummer: 93103816.0
(22) Anmeldetag: 10.03.1993
(51) Int. Cl.: F23D 11/10, F16K 23/00, B05B 1/28, B05B 1/30

(54) **Druckluft-Oelzerstäuberdüse**

(30) Priorität: 24.04.1992 CH 1332/92
(71) Anmelder: SATRONIC AG, CH-8157 Dielsdorf (CH)
(72) Erfinder: Lüdi, Roger, CH-7307 Jenins (CH)
(74) Vertreter: EGLI-EUROPEAN PATENT ATTORNEYS

(57) **Zusammenfassung**

Eine zum Einsetzen in einen Brenner oder dergleichen bestimmte Düse (R) ist mit einem Düsenkörper (3) versehen, in den eine Sacklochbohrung (7) zur Aufnahme eines koaxialen Einsatzes (12) eingeformt ist. Am Grund der Sacklochbohrung (7) befindet sich eine Düsenöffnung (9) zum Ausbringen eines Heizöl-Druckluft-Gemisches. Zwischen Einsatz (12) und Düsenkörper (3) ist in der Sacklochbohrung (7) zum Teil als zylindrischer Ringspalt (20) und zum Teil als kegelstumpfförmiger Spalt (8) ausgebildeter Zwischenraum zum Führen von Druckluft vorgesehen. Eine Ventilanordnung ist einerseits mit dem zylindrischen Ringspalt (20) im Abstand vom kegelstumpfförmigen Spalt (8), andererseits über eine Axialbohrung (23) mit einer Zuleitung (18) für Heizöl verbunden.

Dabei besteht die Ventilanordnung vorzugsweise aus einem die Axialbohrung (23) umfangenden Ringwall (25) und einer scheibenförmigen, einer Walloberkante (28) aufliegenden, druckbelasteten Membran (29).

## Beschreibung

Die Erfindung betrifft eine Düse zum Einsetzen in einen Brenner oder dergleichen zur Zerstäubung eines Nebels von Heizöl in Druckluft aus einer Düsenöffnung eines im wesentlichen axialsymmetrischen Düsenkörpers, wobei
· der Düsenkörper eine axiale Sacklochbohrung aufweist, an deren Grund die Düsenöffnung axial angeordnet ist und in die ein axialsymmetrischer Einsatz koaxial angeordnet ist,
· in der Sacklochbohrung zwischen dem Einsatz und dem Düsenkörper ein axialsymmetrischer Zwischenraum ausgebildet ist, der einen im wesentlichen zylindrischen Ringspalt und einen im wesentlichen kegelstumpfförmigen Spalt in solcher Anordnung umfasst, dass der kegelstumpfförmige Spalt die Düsenöffnung mit dem zylindrischen Ringspalt verbindet,
· der Einsatz eine Axialbohrung aufweist, die an ihrem einen Ende mit einer Zuleitung für Heizöl und an ihrem anderen Ende über eine im Einsatz angeordnete Ventilanordnung mit dem Zwischenraum in Verbindung steht, und
· an einer den kegelstumpfförmigen Spalt begrenzenden Mantelfläche Leitkanäle angeformt sind, die im wesentlichen tangential zur Düsenöffnung verlaufen.

Eine derartige Düse ist beispielsweise aus US-2254123 bekannt. Diese bekannte Düse arbeitet mit zugeführter Druckluft und mit unter Druck zugeführtem Heizöl. Dabei wird die Zufuhr von Heizöl durch die Ventilanordnung gesteuert, welche bei US-2254123 eine federbelastete Kugel aufweist, die mit einem entsprechenden Ventilsitz zusammenwirkt. Das Heizöl fliesst in einer Axialbohrung an der Kugel und dann an der Feder vorbei bis zu einer der Düsenöffnung gegenüberliegenden Stelle des Zwischenraumes zwischen dem Düsenkörper und dem Einsatz wo es sich mit der Druckluft vermischt. Die resultierende Mischung tritt dann durch die Düsenöffnung als Nebel von Heizöl in Druckluft aus.

Bei dieser aus US-2254123 bekannten Düse, bei der die Ventilanordnung das Nachtropfen der Düse verhindern soll, sitzen jedoch die Kugel und die Feder dieser Ventilanordnung in einem Raum, der immer, d.h. auch wenn die Heizölzufuhr durch die Kugel abgeschaltet wurde, mit Heizöl gefüllt bleibt. Deshalb kommt es mit dieser Art von Düse trotz der Ventilanordnung unvermeidlich zu einem gewissen Nachtropfen der Düse nach dem Abstellen des Brenners. Hierdurch verbleiben im Brenner Heizölrückstände, d.h. unverbrannte Kohlenwasserstoffe, welche sich beim Starten und beim Abstellen des Brenners auf die Zusammensetzung der Abgase sehr ungünstig auswirken. Bei den heute sehr strengen Vorschriften und Normen wirkt sich dies sehr negativ auf die Beurteilung des Brenners aus.

Zudem ist es erforderlich, der Düse das Heizöl unter einem Druck zuzuführen, der genügend hoch ist, um die Ventilanordnung zu öffnen bzw. die Kugel vom Ventilsitz abzuheben.

Eine Ventilanordnung, die das Nachtropfen einer Düse verhindern soll, ist beispielsweise auch aus EP-0230150 bekannt. Diese Ventilanordnung weist einen die Axialbohrung umfangenden axialsymmetrischen Ringwall und eine scheibenförmige Membran auf. Der Ringwall wird von einem axialsymmetrischen Ringflansch umschlossen, der eine axialsymmetrische Walloberkante aufweist, auf welche die durch ein Feder druckbelastete Membran aufliegt, während der Ringflansch von der Membran überdeckt ist.

Auch bei dieser aus EP-0230150 bekannten Düse ist jedoch zwischen der Membran und der Düsenöffnung ein Raum ausgebildet, der immer, d.h. auch wenn die Zufuhr der zu spritzenden Flüssigkeit durch die Membran abgeschaltet wurde, mit dieser Flüssigkeit gefüllt bleibt. Es ist deshalb nicht einzusehen, wie eine Düse nach EP-0230150 bei Verwendung mit Heizöl in einem Brenner weniger nachtropfen sollte als die Düse nach US-2254123. Somit wird durch EP-0230150 nur nahegelegt, im Zusammenhang mit einer Spritzdüse eine Ventilanordnung mit federbelasteter Kugel durch eine Ventilanordnung mit federbelasteter Membran zu ersetzen.

Zudem ist es auch bei einer Düse der aus EP-0230150 bekannten Art erforderlich, der Düse die zu spritzende Flüssigkeit unter einem Druck zuzuführen, der genügend hoch ist, um die Ventilanordnung zu öffnen bzw. die Membran vom als axialsymmetrische Walloberkante ausgebildeten Ventilsitz abzuheben.

Der vorliegenden Erfindung liegt die Aufgabe zugrunde, die vorangehend erwähnten Nachteile der bisher bekannten Düsen zu beseitigen und inbesondere den immer, d.h. auch bei abgeschalteter Heizölzufuhr mit Heizöl gefüllten Raum möglichst klein auszubilden sowie den zur Öffnung der Ventilanordnung erforderlichen Druck zu vermindern.

Zur Lösung dieser Aufgabe ist eine erfindungsgemässe Düse dadurch gekennzeichnet, dass zur Erstellung ihrer Verbindung mit dem Zwischenraum die Ventilanordnung mit dem zylindrischen Ringspalt im Abstand vom kegelstumpfförmigen Spalt verbunden ist.

Die erfindungsgemässe Ausbildung der Düse bewirkt, dass der grösste Teil des Zwischenraumes durch die Druckluft von Heizöl freigespült wird, sobald die Zufuhr von Heizöl abgestellt wird. Aus diesem gespülten Teil des Zwischenraumes kann nichts nachtropfen.

Die erfindungsgemässe Ausbildung der Düse bewirkt auch eine Verminderung des bei abgeschalteter Heizölzufuhr mit Heizöl gefüllt bleibenden Raumes im Vergleich zu den bisher bekannten Düsen. Damit wird erreicht, dass im Brenner die Heizölrückstände, d.h. die unverbrannten Kohlenwasserstoffe, überhaupt in nur sehr geringer Menge zurückbleiben können.

Die erfindungsgemässe Ausbildung der Düse bewirkt zudem eine Verminderung des zur Öffnung der Ventilanordnung erforderlichen Druckes. Damit wird die Gefahr eines Lecks bzw. das Nachtropfen an der Ventilanordnung noch besser beseitigt als bei den bisher bekannten Düsen.

Nicht zuletzt bewirkt die erfindungsgemässe Ausbildung der Düse, dass die Mischung von Heizöl und Druckluft nicht in Nähe der Düsenöffnung bei der Spitze des kegelstumpfförmigen Spaltes, sondern (in Durchflussrichtung betrachtet) am Anfang des zylindrischen Ringspaltes weit weg von der Spitze des kegelstumpfförmigen Spaltes erfolgt. Dies hat zur Folge, dass das ganze Gemisch von Heizöl und Druckluft einen Drall bekommt, wenn es im kegelstumpfförmigen Spalt an den Leitkanälen des Einsatzes vorbeifliesst, während bei den bisher bekannten Düsen nur die Druckluft einen solche Drall bekommen konnte. Daraus ergibt sich eine wesentlich bessere Zerstäubung, verbunden mit einer optimalen Verbrennung des Gemisches.

Vorzugsweise besteht die Ventilanordnung im wesentlichen aus einem die Axialbohrung umfangenden axialsymmetrischen Ringwall und einer scheibenförmigen Membran, wobei der Ringwall zwischen einem an der Axialbohrung anschliessenden axialsymmetrischen Trichter und einem axialsymmetrischen Ringflansch ausgebildet ist und eine axialsymmetrische Walloberkante aufweist, auf welche die Membran druckbelastet aufliegt, während der Ringflansch über Radialbohrungen mit dem zylindrischen Ringspalt in Verbindung steht und von der Membran überdeckt ist.

Bei dieser vorteilhaften Weiterbildung der erfindungsgemässen Düse ist die Injektorwirkung beim T-förmigen Anschluss der Radialbohrungen am zylindrischen Ringspalt, d.h. die Saugwirkung der Druckluft an den Radialbohrungen, möglichst gering. Das hat zur Folge, dass die zum sicheren Schliessen der Ventilanordnung benötigte Federbelastung der Membran gering sein kann, was seinerseits zur Folge hat, dass der Druck, der zur Speisung der Düse mit Heizöl gegen diese Federbelastung der Membran benötigt wird, ebenfalls gering sein kann. Durch die so erreichte weitere Verminderung des zur Öffnung der Ventilanordnung erforderlichen Druckes wird die Gefahr eines Lecks bzw. das Nachtropfen an der Ventilanordnung noch besser beseitigt als bei den bisher bekannten Düsen.

Vorzugsweise münden die Radialbohrungen in Kanälen aus, die im Einsatz als achsparallele Ausnehmungen ausgebildet sind und ihrerseits in dem zylindrischen Ringspalt ausmünden. Dabei sind die Radialbohrungen vorzugsweise in ein Aussengewinde eingeformt, mit dem der Einsatz im Düsenkörper festgeschraubt ist.

In einem vorderen Hülsenabschnitt des Einsatzes ist vorzugsweise ein Ringabsatz vorgesehen, an dem sich der Ringflansch radial nach aussen hin anschliesst und auf dem die Membran aufliegt. Dabei ist im vorderen Hülsenabschnitt vorzugsweise ein Klemmelement eingesetzt, welches die Membran auf dem Ringabsatz befestigt, wobei in das Klemmelement vorzugsweise eine weitere Sacklochbohrung eingeformt ist, in welcher ein Schliesskolben sitzt, wobei dieser Schliesskolben sich vorzugsweise einerseits gegen die Membran und andererseits über eine Druckfeder gegen einen Boden der Sacklochbohrung des Klemmelements abstützt, wobei die Sacklochbohrung vorzugsweise in Nähe der Düsenöffnung über eine axialsymmetrische Entlastungsöffnung mit dem axialsymmetrischen Zwischenraum zwischen dem Einsatz und dem Düsenkörper in Verbindung steht.

Mit der erfindungsgemässen Düse und noch mehr mit den bevorzugten Weiterbildungen davon kann sich Heizöl nach Abschalten der Heizölzufuhr, d.h., nach Anlage der Membran an der Walloberkante nur noch im Ringflansch und in den Radialbohrungen befinden. Das Volumen des Ringflansches und der Radialbohrungen ist klein und das dort vorhandene Heizöl tropft sofort nach Abschalten noch in den zylindrischen Ringspalt aus, so dass es später nicht zu einem Nachtropfen der Düse kommen kann. Zudem wird das in den Radialbohrungen vorhandene Heizöl durch die in den achsparallelen Kanälen strömende Druckluft mitgenommen und durch den zylindrischen Ringspalt und den kegelstumpfförmigen Spalt zur Düsenöffnung gefördert.

Die erfindungsgemässe Ventilanordnung hat den wesentlichen Vorteil, dass der Raum, in dem sich der Schliesskolben und die Druckfeder befinden, durch die Membran verschlossen ist, so dass in diesen Raum kein Heizöl einfliessen kann, zumindest von der Seite der Membran her nicht. Somit verbleiben auch keine Heizölrückstände nach Schliessen der Ventilanordnung in diesem Raum. Gleichzeitig kann der Schliesskolben mit einer derart grossen Oberfläche an der Membran anliegen, dass er auch die Walloberkante des Ringwalles überdeckt. Beim Schliessen der erfindungsgemässen Ventilanordnung wird somit die Membran durch den Schliesskolben auch auf die Walloberkante gedrückt, was das Dichthalten wesentlich verbessert. Ferner ist eine Druckeinstellung für die Druckfeder, mit welcher der Schliesskolben druckbelastet ist, leichter und genauer erreichbar. Die Druckfeder kann auch durch den Schliesskolben selbst besser geführt werden und, wenn sie in dem Schliesskolben in einem entsprechenden Raum aufgenommen ist, nicht seitlich ausweichen.

Die Entlastungsöffnung, die dazu beiträgt, dass sich der Schliesskolben in der entsprechenden Sacklochbohrung in dem Klemmelement ungehindert bewegen kann, befindet sich am untersten Punkt der Sacklochbohrung in Nähe der Düsenöffnung bei der Spitze des kegelstumpfförmigen Spaltes. Heizöl könnte also höchstens durch diese Entlastungsöffnung in die Sacklochbohrung des Klemmelementes gelangen, dieses Heizöl wird jedoch durch das mit hoher Geschwindigkeit an der Entlastungsöffnung vorbeiströmende Heizöl-Luft-Gemisch sofort aus der Sacklochbohrung bzw. der Entlastungsöffnung gesogen.

Ingesamt arbeitet die erfindungsgemässe Düse äusserst zuverlässig. Alle vorgegebenen Grenzwerte nach den entsprechenden Normen bezüglich unverbrannten Kohlenwasserstoffen können in allen Betriebsphasen erheblich unterboten werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1: einen Längsschnitt durch einen Teil einer erfindungsgemässen Düse zur Zerstäubung eines Nebels von Heizöl in Druckluft;
- Fig. 2: einen Längsschnitt durch einen Düsenkörper zur Verwendung in der Düse gemäss Fig. 1;
- Fig. 3: einen Querschnitt durch den Düsenkörper gemäss Fig. 2 entlang der Linie III-III;
- Fig. 4: einen hälftigen Längsschnitt und eine hälftige Draufsicht auf einen Einsatz in der Düse gemäss Fig. 1;
- Fig. 5: einen Querschnitt durch den Einsatz gemäss Fig. 4 entlang der Linie V-V.

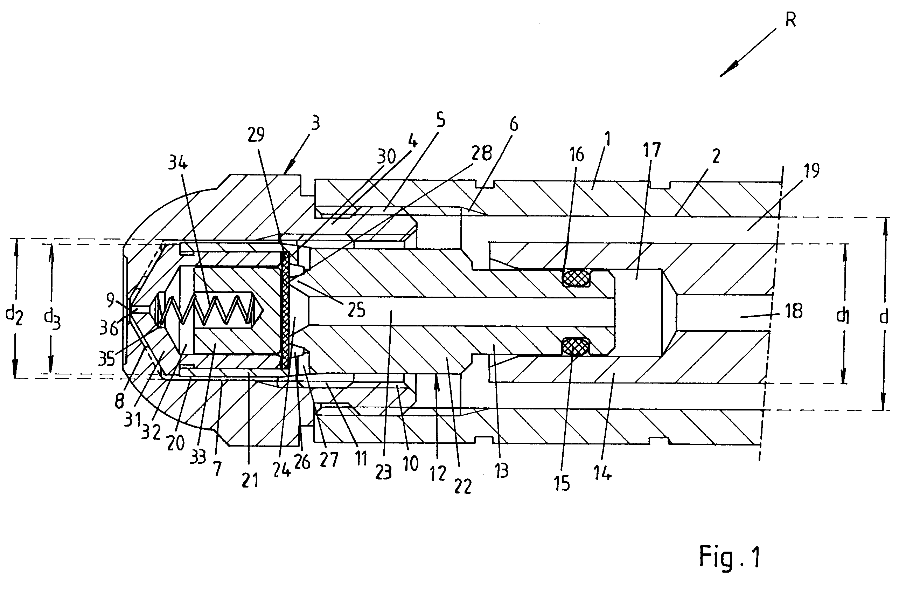

Eine Düse R zur Zerstäubung eines Nebels von Heizöl in Druckluft weist gemäss Fig. 1 ein im wesentlichen zylindrisches Düsengehäuse 1 auf, welches einen axialsymmetrischen Aufnahmeraum 2 besitzt. In diesen Aufnahmeraum 2 ist von der Spitze her ein im wesentlichen axialsymmetrischer Düsenkörper 3 angesetzt, wobei ein hülsenförmiger Ringkragen 4 ein Aussengewinde 5 hat, über welches der Düsenkörper 3 in ein Innengewinde 6 des Aufnahmeraums 2 eingeschraubt ist.

Von dem Aufnahmeraum 2 her ist in den Düsenkörper 3 eine axiale Sacklochbohrung 7 eingeformt, welche sich an ihrem Grund kegelstumpfförmig bis zu einer Düsenöffnung 9 des Düsenkörpers 3 verjüngt.

Zum Aufnahmeraum 2 hin ist auch in diese Sacklochbohrung 7 ein Innengewinde 10 eingeformt, welches mit einem Aussengewinde 11 eines axialsymmetrischen Einsatzes 12 zusammenwirkt, wobei dieser Einsatz 12 in den Düsenkörper 3 koaxial eingeschraubt ist.

Insgesamt ist der Einsatz 12 hülsenartig ausgeformt, wobei ein hinterer Hülsenabschnitt 13 in einen Düsenstock 14 eingesetzt und dort abgedichtet geführt ist. Die Abdichtung erfolgt durch einen O-Ring 15, welcher in einer Ringnut 16 des Hülsenabschnitts 13 sitzt. Dieser O-Ring 15 liegt andererseits der Innenwand eines axialen Gleitraumes 17 an, in den eine Zuleitung 18 für Heizöl einmündet.

Der Durchmesser des Aufnahmeraums 2 in dem Düsengehäuse 1 ist grösser als der Durchmesser d1 des Düsenstockes 14, so dass sich zwischen dem Düsengehäuse 1 und dem Düsenstock 14 ein zylindrischer Ringraum 19 ausbildet, in welchem Druckluft zugeführt wird. Der Ringraum 19 geht dann zwischen dem Einsatz 12 und dem Düsenkörper 3 in einen im wesentlichen zylindrischen Ringspalt 20 über, der seinerseits wegen bei der kegelstumpfförmigen Verjüngung der Sacklochbohrung 7 in zur Düsenöffnung 9 hin in einen im wesentlichen kegelstumpfförmigen Spalt 8 übergeht. Der zylindrische Ringspalt 20 entsteht dadurch, dass der Durchmesser d2 der Sacklochbohrung 7 etwas grösser ist als der Durchmesser d3 eines vorderen Hülsenabschnittes 21 des Einsatzes 12. Der kegelstumpfförmige Spalt 8 entsteht durch einen entsprechenden axialen Versatz zwischen dem kegelstumpfförmigen Grund der Sacklochbohrung 7 und einer Frontpartie eines weiter unten beschriebenen, am Einsatz 12 angeordneten axialsymmetrischen Klemmelements 31. Der zylindrische Ringspalt 20 und der kegelstumpfförmige Spalt 8 bilden somit zusammen einen axialsymmetrischen Zwischenraum zwischen dem Einsatz 12 und dem Düsenkörper 3.

Von dem vorderen Hülsenabschnitt 21 her ist in ein Mittelteil 22 und daran anschliessend in den hinteren Hülsenabschnitt 13 in dem Einsatz 12 eine Axialbohrung 23 eingeformt, welche nach hinten mit dem Gleitraum 17 und der Zuleitung 18 für Heizöl in Verbindung steht. Am ihrem anderen Ende erweitert sich diese Axialbohrung 23 trichterförmig, wobei der Trichter 24 von einem Ringwall 25 umfangen ist. Dieser Ringwall 25 greift bereits in den vorderen Hülsenabschnitt 21 ein, so dass jenseits des Ringwalles 25 ein Ringflansch 26 ausgebildet ist, welcher über Radialbohrungen 27 mit dem zylindrischen Ringspalt 20 in Verbindung steht.

Auf einer Walloberkante 28 liegt eine scheibenförmige Membran 29 auf, welche auch den Ringflansch 26 übergreift und seitlich im vorderen Hülsenabschnitt 21 einem Ringabsatz 30 aufliegt. Auf diesen Ringabsatz 30 wird die Membran 29 mittels eines Klemmelementes 31 gedrückt und dort festgehalten. Dieses Klemmelement 31 ist in den vorderen Hülsenabschnitt 21 eingeschoben und dort festgelegt. Im Bereich des Grundes der Sacklochbohrung 7 ist dieses Klemmelement 31 zur Düsenöffnung 9 hin kegelstumpfförmig ausgeformt, so dass hier der vorangehend erwähnte, zwischen dem Einsatz 12 und dem Düsenkörper 3 gebildete axialsymmetrische Zwischenraum entsprechend kegelstumpfförmig verläuft und den kegelstumpfförmigen Spalt 8 bildet.

In das Klemmelement 31 ist eine weitere Sacklochbohrung 32 eingeformt, in welcher ein Schliesskolben 33 gleitet. Dieser Schliesskolben 33 stützt sich einerseits an der Membran 29 ab, andererseits sitzt in ihm eine Druckfeder 34, welche den Schliesskolben 33 gegen einen trichterförmigen Boden 35 der Sacklochbohrung 32 abstützt. Aus diesem Boden 35 führt im übrigen eine Entlastungsöffnung 36 zu dem erwähnten Zwischenraum bzw. zu dem kegelstumpfförmigen Spalt 8 in Nähe und gegenüber der Düsenöffnung 9.

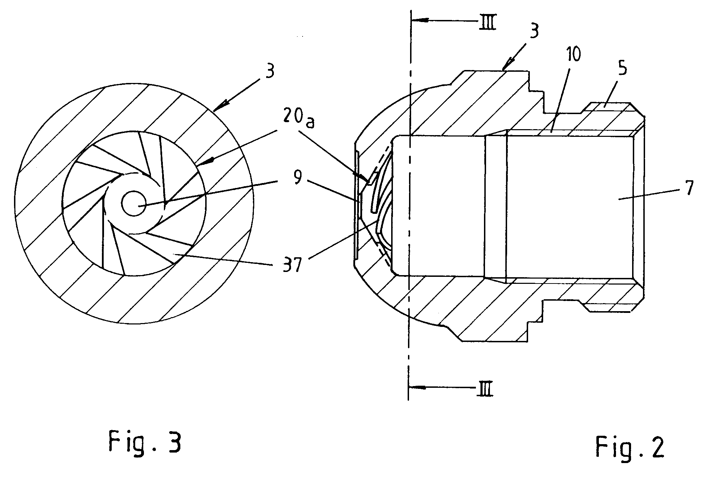

In Fig. 2 und 3 ist der Düsenkörper 3 ohne den Einsatz 12 dargestellt. Hierbei ist vor allem erkennbar, dass der kegelstumpfförmige Grund der Sacklochbohrung 7 im Bereich seiner kegelstumpfförmigen Mantelfläche 20a mit etwa tangential zur Düsenöffnung 9 verlaufenden Leitkanälen 37 belegt ist. Hierdurch erhält das Heizöl-Luft-Gemisch einen Drall, so dass dieses Gemisch mit diesem Drall aus der Düsenöffnung 9 austritt.

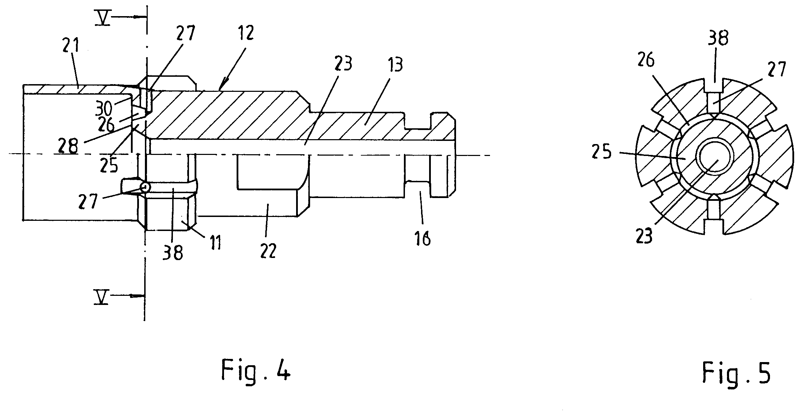

In den Fig. 4 und 5 ist der Einsatz 12 einzeln dargestellt. Vor allem ist erkennbar, dass das Mittelteil 22 mit dem Aussengewinde 11 belegt ist, wobei der zylindrische Ringspalt 20 in diesem Bereich durch Kanäle 38 ergänzt wird, die das Aussengewinde queren. In diesen Kanälen 38 münden auch die Radialbohrungen 27 aus, welche den zylindrischen Ringspalt 20 mit dem Ringflansch 26 verbinden.

Die Funktionsweise der vorliegenden Erfindung ist die folgende:
In Ruhelage steht vor der Membran 29 eine Heizölsäule an, wobei die Membran 29 der Heizölsäule in der Axialbohrung 23 einen Gegendruck von ca. 1,5 bis 2 bar entgegensetzt.

Soll die Düse R zur Zerstäubung eines Nebels von Heizöl in Druckluft in Betrieb gesetzt werden, erfolgt ein Einbringen von Druckluft durch den Ringraum 19 in den zylindrischen Ringspalt 20, wobei diese Druckluft aus der Düsenöffnung 9 austritt. Danach wird die Heizölsäule in der Axialbohrung 23 unter Druck gesetzt, bis der oben erwähnte Gegendruck der Membran überschritten ist. Hierdurch erfolgt ein Abheben der Membran von ihrem Ventilsitz auf der Walloberkante 28 des Ringwalles 25 gegen den von der Druckfeder 34 beaufschlagten Schliesskolben 33. Heizöl kann nun aus dem Trichter 24 über die Walloberkante 28 in den 26 und durch diesen sowie die daran anschliessenden Radialbohrungen 27 in den zylindrischen Ringspalt 20 austreten. Dort wird das Heizöl durch die Druckluft mitgerissen, und es vermischt sich mit der Druckluft. Vor der Düsenöffnung 9 wird diesem Heizöl-Luft-Gemisch (und nicht nur der Druckluft) im kegelstumpfförmigen Spalt 8 durch die Leitkanäle 37 noch ein Drall mitgegeben. Beim Austritt mit Drall aus der Düsenöffnung 9 entsteht ein feiner und homogener Nebel von Heizöl in Druckluft, der ausgezeichnete Zündeigenschaften aufweist.

Beim Abstellen eines Brenners, in dem eine derartige Düse R zur Zerstäubung eines Nebels von Heizöl in Druckluft eingesetzt ist, wird die Heizölzufuhr verzögerungsfrei unterbrochen, so dass die Membran sofort ihren Ventilsitz auf der Walloberkante 28 unter dem Druck des Schliesskolbens 33 annimmt und die Zufuhr von Heizöl absolut sicher unterbrochen ist. Ein Nachtropfen ist nicht möglich.

Im übrigen sei noch darauf hingewiesen, dass das mit hoher Geschwindigkeit an der Entlastungsöffnung 36 des Klemmelements 31 nahe der Düsenöffnung 9 vorbeiströmende Heizöl-Luft-Gemisch in dieser Entlastungsöffnung 36 eine Saugströmung bzw. eine Injektorwirkung erzeugt, die dafür sorgt, dass ein allenfalls in die Sacklochbohrung 32 eingesickertes Heizöl aus dieser Sacklochbohrung 32 sofort wieder abgesaugt wird.

## Patentansprüche

1. Düse zum Einsetzen in einen Brenner oder dergleichen zur Zerstäubung eines Nebels von Heizöl in Druckluft aus einer Düsenöffnung (9) eines im wesentlichen axialsymmetrischen Düsenkörpers (3), wobei
· der Düsenkörper (3) eine axiale Sacklochbohrung (7) aufweist, an deren Grund die Düsenöffnung (9) axial angeordnet ist und in die ein axialsymmetrischer Einsatz (12) koaxial angeordnet ist,
· in der Sacklochbohrung (7) zwischen dem Einsatz (12) und dem Düsenkörper (13) ein axialsymmetrischer Zwischenraum ausgebildet ist, der einen im wesentlichen zylindrischen Ringspalt (20) und einen im wesentlichen kegelstumpfförmigen Spalt (8) in solcher Anordnung umfasst, dass der kegelstumpfförmige Spalt (8) die Düsenöffnung (9) mit dem zylindrischen Ringspalt (20) verbindet,
· der Einsatz (12) eine Axialbohrung (23) aufweist, die an ihrem einen Ende mit einer Zuleitung (18) für Heizöl und an ihrem anderen Ende über eine im Einsatz (12) angeordnete Ventilanordnung mit dem Zwischenraum in Verbindung steht, und
· an einer den kegelstumpfförmigen Spalt (8) begrenzenden Mantelfläche (20a) Leitkanäle (37) angeformt sind, die im wesentlichen tangential zur Düsenöffnung (9) verlaufen,
**dadurch gekennzeichnet, dass** zur Erstellung ihrer Verbindung mit dem Zwischenraum die Ventilanordnung mit dem zylindrischen Ringspalt (20) im Abstand vom kegelstumpfförmigen Spalt (8) verbunden ist.

2. Düse nach Anspruch 1, dadurch gekennzeichnet, dass die Ventilanordnung im wesentlichen aus einem die Axialbohrung (23) umfangenden axialsymmetrischen Ringwall (25) und einer scheibenförmigen Membran (29) besteht, wobei der Ringwall (25) zwischen einem an der Axialbohrung (23) anschliessenden axialsymmetrischen Trichter (24) und einem axialsymmetrischen Ringflansch (26) ausgebildet ist und eine axialsymmetrische Walloberkante (28) aufweist, auf welche die Membran (29) druckbelastet aufliegt, während der Ringflansch (26) über Radialbohrungen (27) mit dem zylindrischen Ringspalt (20) in Verbindung steht und von der Membran (29) überdeckt ist.

3. Düse nach Anspruch 2, dadurch gekennzeichnet, dass die Radialbohrungen (27) in Kanälen (38) ausmünden, die im Einsatz (12) als achsparallele Ausnehmungen ausgebildet sind und ihrerseits in dem zylindrischen Ringspalt (20) ausmünden.

4. Düse nach Anspruch 3, dadurch gekennzeichnet, dass die Radialbohrungen (27) in ein Aussengewinde (11) eingeformt sind, mit dem der Einsatz (12) im Düsenkörper (3) festgeschraubt ist.

5. Düse nach einem der Ansprüche 2, 3 oder 4, dadurch gekennzeichnet, dass in einem vorderen Hülsenabschnitt (21) des Einsatzes (12) ein Ringabsatz (30) vorgesehen ist, an dem der Ringflansch (26) radial nach aussen hin anschliesst und auf dem die Membran (29) aufliegt.

6. Düse nach Anspruch 5, dadurch gekennzeichnet, dass im vorderen Hülsenabschnitt (21) ein Klemmelement (31) eingesetzt ist, welches die Membran (29) auf dem Ringabsatz (30) befestigt.

7. Düse nach Anspruch 6, dadurch gekennzeichnet, dass in das Klemmelement (31) eine weitere Sacklochbohrung (32) eingeformt ist, in welcher ein Schliesskolben (33) sitzt.

8. Düse nach Anspruch 7, dadurch gekennzeichnet, dass sich der Schliesskolben (33) einerseits gegen die Membran (29) und andererseits über eine Druckfeder (34) gegen einen Boden (35) der Sacklochbohrung (32) des Klemmelements (31) abstützt.

9. Düse nach Anspruch 8, dadurch gekennzeichnet, dass die Sacklochbohrung (32) in Nähe der Düsenöffnung (9) über eine axialsymmetrische Entlastungsöffnung (36) mit dem axialsymmetrischen Zwischenraum zwischen dem Einsatz (12) und dem Düsenkörper (13) in Verbindung steht.
